# EUROPEAN PATENT SPECIFICATION

(11) **EP 2 606 099 B1**
(45) Date of publication and mention of the grant of the patent: **25.11.2020**
(21) Application number: 11818322.7
(22) Date of filing: 08.08.2011
(51) Int. Cl.: B01L 7/00, C09K 5/14, C22C 26/00, C22C 1/04, C22C 13/00, C22C 13/02

(54) **PCR APPARATUS COMPRISING LOW HEAT CAPACITY COMPOSITE**
PCR-GERÄT MIT EINEM VERBUNDSTOFF MIT GERINGER WÄRMEKAPAZITÄT
APPAREIL DE PCR COMPRENANT UN COMPOSITE À FAIBLE CAPACITÉ THERMIQUE

(30) Priority: 17.08.2010 KR 20100079043
(43) Date of publication of application: 26.06.2013
(73) Proprietor: Bioneer Corporation, Daejeon 306-220 (KR)
(72) Inventor: PARK, Han Oh, Daejeon 305-761 (KR); KIM, Jae Ha, Daejeon 302-772 (KR)
(74) Representative: Herrmann, Uwe
(86) International application number: PCT/KR2011/005756
(87) International publication number: WO 2012/023722

(56) References cited:
- WO-A1-01/08800
- CN-A- 101 338 181
- JP-A- 2010 065 916
- US-A1- 2007 298 537
- US-A1- 2008 003 649
- US-A1- 2008 003 649
- US-A1- 2009 203 082
- US-B2- 7 164 585
- H. P. R. FREDERIKSE ET AL: "Thermal and electrical properties of copper-tin and nickel-tin intermetallics", JOURNAL OF APPLIED PHYSICS, vol. 72, no. 7, 1 June 1992 (1992-06-01), page 2879, XP055082464, ISSN: 0021-8979, DOI: 10.1063/1.351487
- FREFERIKSE, H. P. R ET AL.: 'Thermal and electrical properties of copper-tin and nickel-tin intermetallics' JOURNAL OF APPLIED PHYSICS vol. 72, no. 7, 01 October 1992, pages 2879 - 2882, XP055082464

## Description

### [Technical Field]

The present invention relates to a low heat capacity composite for a thermal cycler, and more particularly to a low heat capacity composite including tin, and metal except tin, nano-diamond, or a mixture thereof.

### [Background Art]

Due to the recent development of industry, the number of heat radiating and heating electronic products has increased and techniques for materials having excellent thermoelectric property has been recognized as very important fields. The importance thereof is growing bigger in fields of heat radiating parts of a personal computer, heat radiator of a light emitting diode (LED), thermal blockparts of a thermal cycler. Inparticular, the thermal cycler is a basic diagonostic equipment necessary for molecular diagonostics, and, as the importance thereof is increasing, heat carrier techniques for high-speed diagonosis are receiving much attention.

A polymerase chain reaction (PCR) thermal cycler is the most important equipment in a biotechnology field, particularly molecular diagonostics field. The PCR is a technique for DNA replication, which was developed by Mullis, et al., in 1983. The PCR is used to continuously replicate a template DNA strand by using enzymes, and the PCR is divided into three stages of a denaturation stage of causing DNA melting of double-stranded template DNA, which is to be dupliated, to yield single-stranded DNA, an annealing stage of binding several tens of bases of primers to the single-stranded DNA so that the primer designates a reaction start site and helps an enzymatic reaction to start, and an extension stage of performing DNA replication from the site to which the primer is bound to produce complete double-stranded DNA. Through the three stages, the amount of DNA is theoretically doubled, and if this procedure is repetitively performed n times, the amount of DNA is increased to, theoretically 2ⁿ times. In general, a thermal block capable of controlling the temperature is used as a PCR thermal cycler, and the thermal block periodically repeats temperature rise and fall according to the predetermined time interval, thereby controlling the temperature thereof.

A core part of the PCR thermal cycler is a thermal block having excellent thermal characteristics. Due to the nature of the PCR, temperature rise and fall are repeated, and thus, a heat block having high heat conductivity and low heat capacity is required. The heat block so far is manufactured by aluminum metal, and the high-speed PCR thermal cycler is made of silver.

However, heat capacity performance of aluminum used in this PCR thermal cycler is lowered, and thus, aluminum is difficult touse in the high- speed PCR, which is currently the biggest problem. Also, silver is expensive, and thus, a method for using silver causes economical problems. Therefore, various heat carrier materials for solving the above problems has been studied.

Meanwhile, US Patent Registration No. 5, 795, 547 and US Patent Laid-Open Publication No. 2009-0074628 disclose contents with respect to the thermal cycler, but has problems in that heat capacity characteristic is lowered due to use of aluminum, silver, copper, or the like. International Publication No. WO 2006-138586 and US Patent Registration No. 5, 542, 60 discloses a method of improving heat transfer by coating aluminum, copper, indium, tin, Pb or the like on a polymer upper plate, dispersing metal particles, but the heat capacity characteristic is limited. US Patent Registration No. 5,250,229 discloses that the block is prepared by mixing bismuth, copper, lead, zinc, iron, cobalt, or nickel oxide and silver or noble metals, but has a problem of highproduction cost. Furthermore, US Patent Laid-Open Publication No. 2008-0003649 discloses use of gallium-indium alloy, but has a problem of high production cost, and US Patent Laid-Open Publication No. 2008-0124722 discloses use of heat pipes in order to reduce the temperature, but has a problem of complicated manufacture.

Further, US 7 164 585 B2 discloses a PCR apparatus having the features of the pre-characterising portion of claim 1.

US 2008/003649 A1 discloses a thermal block for a thermal cycler manufactured from a low heat capacity composite comprising tin and another metal.

US2009/203082 A1 discloses a thermal block for a PCR thermocycler having a good thermal conductivity and low heat capacity.

### [Disclosure]

### [Technical Problem]

An object of the present invention is to provide a low heat capacity composite for a thermal cycler having reliability, high economic efficiency, and superior thermal characteristics, in order to overcome difficulty in manufacture and reproducibility due to uniqueness of the existing PCR thermal cycler only.

More specifically, another object of the present invention is to provide a low heat capacity composite including tin; and metal except tin, nanodiamond, or a mixture thereof, and a low heat capacity molded product manufactured by sintering, rolling, or casting the composite.

### [Technical Solution]

Hereinafter, a low heat capacity composite of the present invention will be described in detail with reference to the accompanying drawings. The drawings to be introduced below are provided by way of example so that the idea of the present invention can be sufficiently transferred to those skilled in the art to which the present invention pertains, and thus may be exaggerated.

Unless indicated otherwise, it is to be understood that all the terms used in the specification including technical and scientific terms has the same meaning as those that are understood by those who are skilled in the art, and further, in the description below and the accompanying drawings, well-known functions or constructions will not be described in detail since they may unnecessarily obscure the understanding of the present invention.

The present invention provides a PCR apparatus according to claim 1.

The low heat capacity composite according to the present invention is a low heat capacity composite for a thermal cycler having reliability, high economic efficiency, and superior thermal characteristics.

The low heat capacity molded product manufactured by sintering, rolling, or casting the composite has physical properties of heat conductivity of 37.443 W/ (m K), heat capacity of 0.238 J/ (g K), and volumetric heat capacity of 1.748 J/ (cm³ K) .

Hereinafter, the present invention will be described in detail.

The present invention provides a low heat capacity composite including tin, copper and antimony.

More specifically, the metal except tin, nanodiamond, or a mixture thereof is uniformly dispersed in tin powder, and the mixed and dispersed powder is subjected to sintering, rolling, or casting, to have a low heat capacity. Here, in order to improve strength and thermal characteristics of tin, the metal except tin, nanodiamond, or a mixture thereof are mixed and then prepared into an alloy type.

In the present invention, the metal is copper (Cu) and antimony (Sb) .

More specifically, the low heat capacity composite is tin-copper-antimony.

In the present invention, the metal except tin, nanodiamond, or a mixture thereof has a purpose of overcoming difficulty in manufacture and reproducibility due to uniqueness of the existing PCR thermal cycler only, and is composed in consideration of the low heat capacity with respect to improvement in impact strength, physical and mechanical properties, heat conductivity, and volumetric heat capacity. This has very important meaning in achieving the purpose of the present invention.

The present invention provides a low heat capacity molded product manufactured by sintering, rolling, or casting a low heat capacity composite including tin; and metal except tin, nanodiamond, or a mixture thereof.

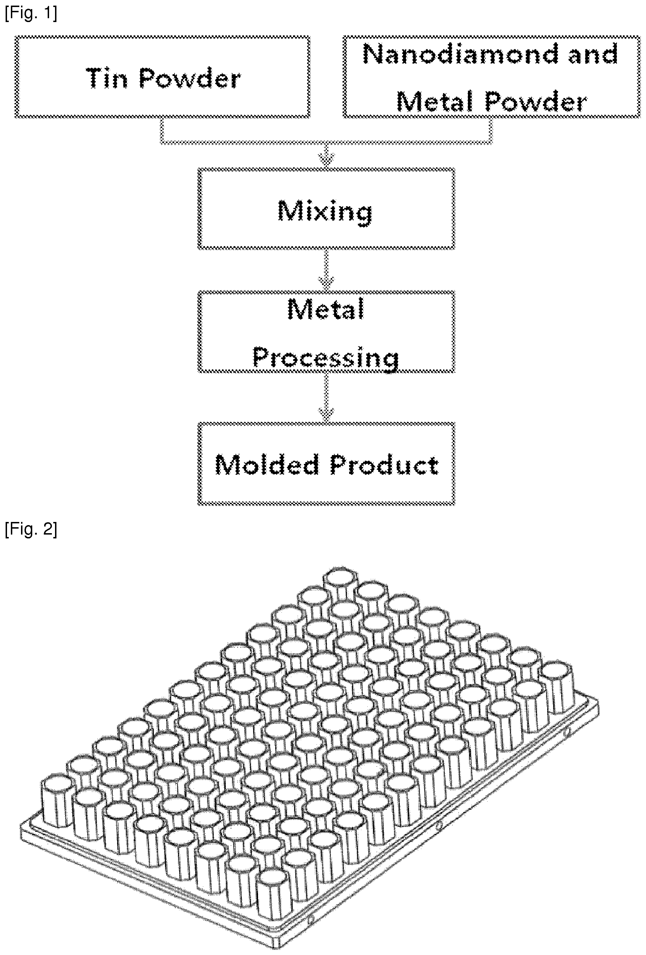

A process procedure of the low heat capacity molded product of the present invention is referred in FIG. 1.

In the present invention, the low heat capacity molded product isa thermal block of a thermal cycler. The thermal block is referred in FIG. 2.

### [Advantageous Effects]

The low heat capacity composite according to the present invention is a low heat capacity composite for a thermal cycler capable of overcoming difficulty in manufacture and reproducibility due to uniqueness of the existing PCR thermal cycler only. The low heat capacity composite according to the present invention can reduce the cost of raw material and retain excellent heat property due to the improvement in low heat capacity and physical and mechanical properties, thereby remarkably shortening PCR reaction time and saving energy when used as a thermal block for a thermal cycler.

### [Description of Drawings]

FIG. 1 is a view schematically showing a sintering, rolling, or casting process of a low heat capacity composite according to the present invention including tin, nanodiamond, and other metals; and
FIG. 2 is a three-dimensional view of a thermal block of a thermal cycler manufactured by sintering, rolling, or casting a low heat capacity composite according to the present invention.

### [Best Mode]

Hereinafter, the present invention will be described in more detail with reference to the inventive example 15 and additional illustrative examples below.

### [illustrative Example 1] Manufacture of molded product from tin-nanodiamond-copper composite powder

Amixture of tin powder, nanodiamond powder, and copper powder is melted and pressed within a hot press apparatus, thereby manufacturing a molded product. More specifically, about 1.2 g of a mixture powder, in which tin powder, nanodiamond powder, and copper powder were mixed at a ratio of 90 : 5 : 5, was inputted between upper and lower punches in a mold (inner center diameter, 12.6 mm) made of graphite, and then the mold containing the composite powder was installed between presses having a vertical press structure in a high-temperature press apparatus (D1P- 20J; Daeheung Scientific Company). The composite powder was pressed by using a hydraulic cylinder and melt-molded at 230°C.

The molding was performed under the conditions of a melt temperature of 230°C and a retention time of 10 minutes. The sintered specimen was analyzed by using a laser-flash calorimetry (Xenon Flash Instrument LFA 447; NETZSCH), and the calorimetric results were tabulated in Table 1.

It can be confirmed from Table 1 that the present example has heat conductivity of 15.559 W/(m K), heat capacity of 0.239 J/(g K), and volumetric heat capacity of 1.519 J/(cm³ K), which was excellent in volumetric heat capacity, as compared with a case where the existing aluminum powder was used alone.

### [illustrative Examples 2 to 6 and Comparative example 1] Manufacture of molded products from tin-nanodiamond-copper composite powder and aluminum powder

Molding is performed to prepare tin-nanodiamond-copper mixture composite specimens by using a high- temperature press under the same conditions as Example 1, except that a mixture of tin, nanodiamond, and copper at a ratio of 85: 5: 10 (Example 2), a mixture of tin, nanodiamond, and copper at a ratio of 75: 5: 20 (Example 3), a mixture of tin, nanodiamond, and copper at a ratio of 46: 5: 49 (Example 4), a mixture of tin, nanodiamond, and copper at a ratio of 94 : 1: 5 (Example 5), and a mixture of tin, nanodiamond, and copper at a ratio of 89: 1: 10 (Example 6) were used. A process from mixing to molding is schematically shown in FIG. 1. For comparison, calorimetry was performed on a specimen obtained by using aluminum powder except other powder (Comparative example 1). The prepared specimens were subjected to calorimetry under the same condition as Example 1, and the calorimetric results were tabulated in Table 1.

**[Table 1] Calorimetric results of tin-nanodiamond- copper mixture composites and aluminum composite**

| Specimen | Tin content | Nanodiamond content | Copper content | density (g/mℓ) | Heat conductivity W/(m K) | Heat capacity J/(g K) | volumetric heat capacity J/(cm³ K) |
|---|---|---|---|---|---|---|---|
| Example 1 | 90% | 5% | 5% | 6.354 | 15.559 | 0.239 | 1.519 |
| Example 2 | 85% | 5% | 10% | 6.138 | 13.270 | 0.241 | 1.479 |
| Example 3 | 75% | 5% | 20% | 6.353 | 20.605 | 0.261 | 1.658 |
| Example 4 | 46% | 5% | 49% | 6.280 | 13.077 | 0.282 | 1.771 |
| Example 5 | 94% | 1% | 5% | 6.957 | 33.274 | 0.239 | 1.663 |
| Example 6 | 89% | 1% | 10% | 6.808 | 23.956 | 0.219 | 1.491 |
| Comparative example 1 | 0% | 0% | Al 100% | 2.696 | 179.000 | 0.914 | 2.464 |

It can be confirmed from Table 1 that each of the present examples has excellent heat capacity and volumetric heat capacity, as compared with Comparative example 1 in which the aluminum powder was used alone.

### [illustrative Examples 7 to 12] Manufacture of molded product from tin-nanodiamond-silver composite powder

Molding was performed to prepare tin-nanodiamond-silver mixture composite specimens by using a high-temperature press under the same conditions as Example 1, except that a mixture of tin, nanodiamond, and silver at a ratio of 90 : 5 : 5 (Example 7), a mixture of tin, nanodiamond, and silver at a ratio of 85: 5: 10 (Example 8), a mixture of tin, nanodiamond, and silver at a ratio of 75: 5: 20 (Example 9), a mixture of tin, nanodiamond, and silver at a ratio of 46: 5: 49 (Example 10), a mixture of tin, nanodiamond, and silver at a ratio of 94: 1: 5 (Example 11), and a mixture of tin, nanodiamond, and silver at a ratio of 89: 1: 10 (Example 12) were used. The prepared specimens were subjected to calorimetry under the same condition as Example 1, and the calorimetric results were tabulated in Table 2.

**[Table 2] Calorimetric results of tin-nanodiamond-silver mixture composites**

| Specimen | Tin content | Nanodiamond content | Silver content | Density (g/mℓ) | Heat conductivity W/(m K) | Heat capacity J/(g K) | volumetric heat capacity J/(cm³ K) |
|---|---|---|---|---|---|---|---|
| Example 7 | 90% | 5% | 5% | 6.018 | 19.775 | 0.254 | 1.529 |
| Example 8 | 85% | 5% | 10% | 6.144 | 21.622 | 0.255 | 1.567 |
| Example 9 | 75% | 5% | 20% | 6.150 | 22.944 | 0.259 | 1.593 |
| Example 10 | 46% | 5% | 49% | 6.260 | 22.645 | 0.261 | 1.634 |
| Example 11 | 94% | 1% | 5% | 6.706 | 20.195 | 0.239 | 1.603 |
| Example 12 | 89% | 1% | 10% | 6.857 | 18.054 | 0.213 | 1.461 |
| Comparative example 1 | 0% | 0% | Al 100% | 2.696 | 179.000 | 0.914 | 2.464 |

It can be confirmed from Table 2 that each of the present examples has excellent heat capacity and volumetric heat capacity, as compared with Comparative example 1 in which the aluminum powder was used alone.

### [illustrative Examples 13 and 14] Manufacture of molded product from tin-copper composite powder

Molding was performed to prepare tin-copper mixture composite specimens by using a high-temperature press under the same conditions as Example 1, except that a mixture of tin powder and copper powder at a ratio of 95: 5 (Example 13) and a mixture of tin powder and copper powder at a ratio of 90: 10 (Example 14) were used.

The prepared specimens were subjected to calorimetry under the same condition as Example 1, and the calorimetric results were tabulated in Table 3.

**[Table 3] Calorimetric results of tin-copper mixture composites**

| Specimen | Tin content | Copper content | density (g/mℓ) | Heat conductivity W/ (m K) | Heat capacity J/(g K) | volumetric heat capacity J/(cm³ K) |
|---|---|---|---|---|---|---|
| Example 13 | 95% | 5% | 7.173 | 30.132 | 0.223 | 1.600 |
| Example 14 | 90% | 10% | 7.218 | 23.066 | 0.215 | 1.552 |
| Comparative example 1 | 0% | Al 100% | 2.696 | 179.000 | 0.914 | 2.464 |

It can be confirmed from Table 3 that each of the present examples has excellent heat capacity and volumetric heat capacity, as compared with Comparative example 1 in which the aluminum powder was used alone.

### [inventive Example 15] Manufacture of molded product from tin-copper-antimony composite powder

Molding was performed to prepare a tin-copper-antimony mixture composite specimen by using a high-temperature press under the same conditions as Example 1, except that a mixture of tin powder, copper powder, and antimony powder at a ratio of 90: 4: 6 was used.

The prepared specimen was subjected to calorimetry under the same condition as Example 1. The results confirmed that that the present example has a heat conductivity of 37.443 W/(m K), heat capacity of 0.238 J/ (g K), and volumetric heat capacity of 1.748 J/ (cm³ K), which were excellent, as compared with Compared example 1 case where the existing aluminum powder was used alone.

### [illustrative Examples 16 to 17] Manufacture of molded product from tin-copper-silver composite powder

Molding was performed to prepare tin-copper-silver mixture composite specimens by using a high-temperature press under the same conditions as Example 1, except that a mixture of tin powder, copper powder, and silver powder at a ratio of 96.5:0.5: 3 (Example 16) and a mixture of tin powder, copper powder, and silver powder at a ratio of 98.5: 0.5: 1 (Example 17) were used.

The prepared specimens were subjected to calorimetry under the same condition as Example 1, and the calorimetric results were tabulated in Table 4.

**[Table 4] Calorimetric results of tin-copper-silver mixture composites**

| Specimen | Tin content | Copper content | Silver content | Density (g/mℓ) | Heat conductivity W/(m K) | Heat capaticy J/(g K) | volumetric heat capacity J/(cm³ K) |
|---|---|---|---|---|---|---|---|
| Example 16 | 96.5% | 0.5% | 3% | 7.169 | 30.037 | 0.246 | 1.764 |
| Example 17 | 98.5% | 0.5% | 1% | 7.128 | 34.661 | 0.245 | 1.746 |
| Comparative example 1 | 0% | 0% | Al 100% | 2.696 | 179.000 | 0.914 | 2.464 |

It can be confirmed from Table 4 that each of the present examples has excellent heat capacity and volumetric heat capacity, as compared with Comparative example 1 in which the aluminum powder was used alone.

### [illustrative Example 18] Measurement on thermal properties of a molded PCR block

A mixture powder of tin powder, copper powder, and antimony powder at a ratio of 90 : 4 : 6 was prepared in Example 15, and the prepared mixture powder was subjected to casting at 230°C to manufacture a PCR block having a shape shown in FIG. 2. The manufactured PCR block was installed at a Real Time PCR apparatus (ExiCycler; Bioneer), and then thermal properties were measured.

Since the PCR reaction temperature is 95°C, a temperature rising rate and a temperature falling rate were measured with respect to the molded PCR block of the present example and the existing aluminum PCR block three times while a temperature rises from 25 °C to 95 °C and falls from 95 °C to 25 °C. Ramping rates thereof were compared and the analysis results were tabulated in Table 5.

**[Table 5] Results on ramping rate of a tin-copper-antimony PCR block**

| Comparision of ramping rate | | |
|---|---|---|
| Temperature rising rate of aluminum block (°C/sec) | Temperature rising rate of block used in Example 15 (°C/sec) | Improvement ratio (%) |
| 3.683 | 4.667 | 26.7% |
| 3.697 | 4.607 | 24.6% |
| 3.700 | 4.59 | 24.1% |

| Temperature falling rate of aluminum block (°C/sec) | Temperature falling rate of block used in Example 15 (°C/sec) | Improvement ratio (%) |
|---|---|---|
| -2.840 | -3.607 | 27.0% |
| -2.840 | -3.563 | 25.5% |
| -2.827 | -3.577 | 26.5% |

It can be confirmed from Table 5 that a case where the PCR block using a low heat capacity composite was used is excellent in an average rising rate by 25.1% and an average falling rate by 26.3% as compared with a case where an aluminum PCR block was used.

## Claims

1. A polymerase chain reaction (PCR) apparatus containing a PCR thermal cycler, said PCR thermal cycler comprising a thermal block, wherein
the block is manufactured by molding with a high-temperature press a low heat capacity composite, wherein the low heat capacity composite is tin-copper-antimony,
**characterised in that**
tin, copper and antimony are contained in the thermal block at a ratio of 90: 4: 6.

2. The PCR apparatus of claim 1, wherein the thermal block has physical properties of heat conductivity of 37.443 W/(m K), heat capacity of 0.238 J/(g K), and volumetric heat capacity of 1.748 J/(cm³ K), wherein the physical properties were analyzed by using laser-flash calorimetry.

## Patentansprüche

1. Polymerasekettenreaktion(PCR) -Gerät, das einen PCR-Thermozykler enthält, wobei der PCR-Thermozykler einen Thermoblock aufweist, wobei der Block durch Formen eines Verbundstoffs niedriger Wärmekapazität mit einer Hochtemperaturpresse hergestellt wird, wobei der Verbundstoff niedriger Wärmekapazität Zinn-Kupfer-Antimon ist,
**dadurch gekennzeichnet, dass**
Zinn, Kupfer und Antimon in dem Thermoblock in einem Verhältnis von 90:4:6 enthalten sind.

2. PCR-Gerät nach Anspruch 1, wobei der Thermoblock die physikalischen Eigenschaften einer Wärmekapazität von 37,443 W/(m K), einer Wärmekapazität von 0,238 J/(g K) und einer volumetrischen Wärmekapazität von 1,748 J(cm³ K) besitzt, wobei die physikalischen Eigenschaften mithilfe von Laserflash-Kalorimetrie analysiert wurden.

## Revendications

1. Appareil pour amplification en chaîne par polymérase (PCR) contenant un cycleur thermique PCR, ledit cycleur thermique PCR comprenant un bloc thermique, dans lequel
le bloc est fabriqué en moulant, avec une presse à haute température, un composite à faible capacité thermique, dans lequel le composite à faible capacité thermique est de l'étain-cuivre-antimoine,
**caractérisé en ce que**
l'étain, le cuivre et l'antimoine sont contenus dans le bloc thermique suivant un rapport de 90 : 4 : 6.

2. Appareil PCR selon la revendication 1, dans lequel le bloc thermique présente des propriétés physiques de conductivité thermique de 37,443 W/(m K), une capacité thermique de 0,238 J(g K), et une capacité thermique volumétrique de 1,748 J/(cm³ K), dans lequel les propriétés physiques ont étés analysées à l'aide d'une calorimétrie par flash laser.
